# EUROPEAN PATENT APPLICATION

(11) **EP 2 624 313 A2**
(43) Date of publication of application: **07.08.2013**
(21) Application number: 12162118.9
(22) Date of filing: 29.03.2012
(51) Int. Cl.: H01L 31/048

(54) **Solar panel module**

(30) Priority: 31.01.2012 TW 101103042
(71) Applicant: AU Optronics Corp., Hsin-Chu 300 (TW)
(72) Inventor: Tseng, Huang-Chi, 300 Hsin-Chu (TW); Li, Chiuan-Ting, 300 Hsin-Chu (TW); Lee, Wei-Jieh, 300 Hsin-Chu (TW); Yang, Chun-Ming, 300 Hsin-Chu (TW); Tung, Kuan-Wen, 300 Hsin-Chu (TW); Huang, Ming-Yuan, 300 Hsin-Chu (TW); Wu, Zhen-Cheng, 300 Hsin-Chu (TW)
(74) Representative: Becker Kurig Straus

(57) **Abstract**

A solar panel module (10) includes a solar panel (20), a supporting stand (30) and a deflecting device (40). The supporting stand (30) is structurally connected to the solar panel (20) for supporting the solar panel (20). The solar panel (20) is disposed inclinedly, and the solar panel (20) has a tilt angle (θ) with respect to a horizontal plane. The deflecting device (40) is disposed underneath the solar panel (20) for deflecting wind (W) blowing from lateral directions toward a wind exiting direction (Dw), which faces a bottom surface (20S) of the solar panel (20).

## Description

### Field of the Invention

This invention generally relates to a solar panel module according to the pre-characterizing clause of claim 1.

### Background of the Invention

Since petroleum resources on Earth are limited, energy demands have shifted toward alternative energies dramatically in recently years. Among the alternative energy sources, solar energy shows the most promising potential. In practical application, the power generating efficiency of a solar panel is still limited due to some problems to be solved. First, the power generating efficiency of a solar panel is generally inversely proportional to its operating temperature. Thus, the higher the operating temperature of a solar panel, the lower the power generating efficiency. Accordingly, even in areas with sufficiency sunlight, the power generating efficiency would be adversely affected due to the environmental temperature changes and the temperature increase caused by substantially long-term power generation. In addition, the power generating efficiency is proportional to the amount of sunlight. However, the incident angle of sunlight in areas of different latitudes is different, and the incident angle varies at different time in a day because the rotation axis of the Earth is tilted. Therefore, a solar panel module disposed in a stationary manner would suffer from low power generating efficiency because sunlight does not enter the solar panel perpendicularly at most of time.

### Summary of the Invention

This in mind, the present invention aims at providing a solar panel module having a solar panel with high heat dissipating efficiency and an adjustable tilt angle.

This is achieved by a solar panel module according to the pre-characterizing clause of claim 1. The dependent claims pertain to corresponding further developments and improvements.

As will be seen more clearly from the detailed description following below, the claimed solar panel module includes a solar panel, a supporting stand and a deflecting device. The supporting stand is structurally connected to the solar panel for supporting the solar panel. The solar panel is disposed inclinedly, and the solar panel has a tilt angle with respect to a horizontal plane. The deflecting device is disposed underneath the solar panel for deflecting wind blowing from lateral directions toward a wind exiting direction, which faces a bottom surface of the solar panel.

### Brief Description of the Drawings

In the following, the invention is further illustrated by way of example, taking reference to the accompanying drawings thereof:
FIG. 1 is a schematic, front view diagram illustrating a solar panel module according to a first preferred embodiment of the present invention,
FIG. 2 is a schematic, side view diagram illustrating a solar panel module according to a first preferred embodiment of the present invention,
FIG. 3 is a schematic, oblique diagram illustrating a deflecting device of the solar panel module according to a first preferred configuration,
FIG. 4 is a schematic, side view diagram illustrating a deflecting device of the solar panel module according to a first preferred configuration,
FIG. 5 is a schematic, oblique diagram illustrating a deflecting device of the solar panel module according to a second preferred configuration,
FIG. 6 is a schematic, oblique diagram illustrating a deflecting device of the solar panel module according to a second preferred configuration,
FIG. 7 is a schematic, cross-sectional view diagram illustrating a deflecting device of the solar panel module according to a second preferred configuration,
FIG. 8 is a schematic, cross-sectional view diagram illustrating a deflecting device of the solar panel module according to a second preferred configuration,
FIG. 9 is a schematic, oblique diagram illustrating a solar panel module according to a second preferred embodiment of the present invention,
FIG. 10 is a schematic, exploded view diagram illustrating a solar panel module according to a second preferred embodiment of the present invention,
FIG. 11 is a schematic, left side view diagram illustrating a solar panel module according to a second preferred embodiment of the present invention, and
FIG. 12 is a schematic, right side view diagram illustrating a solar panel module according to a second preferred embodiment of the present invention.

### Detailed Description

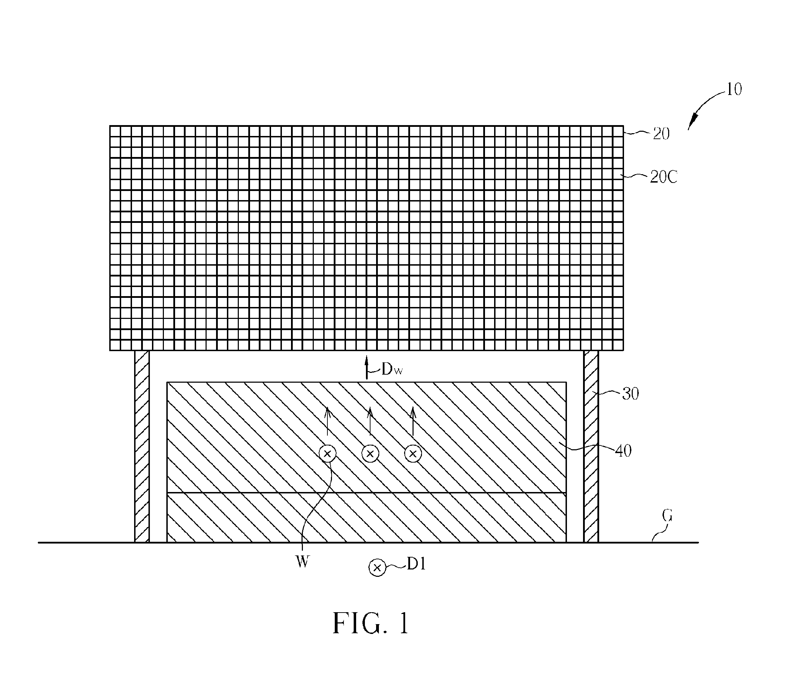

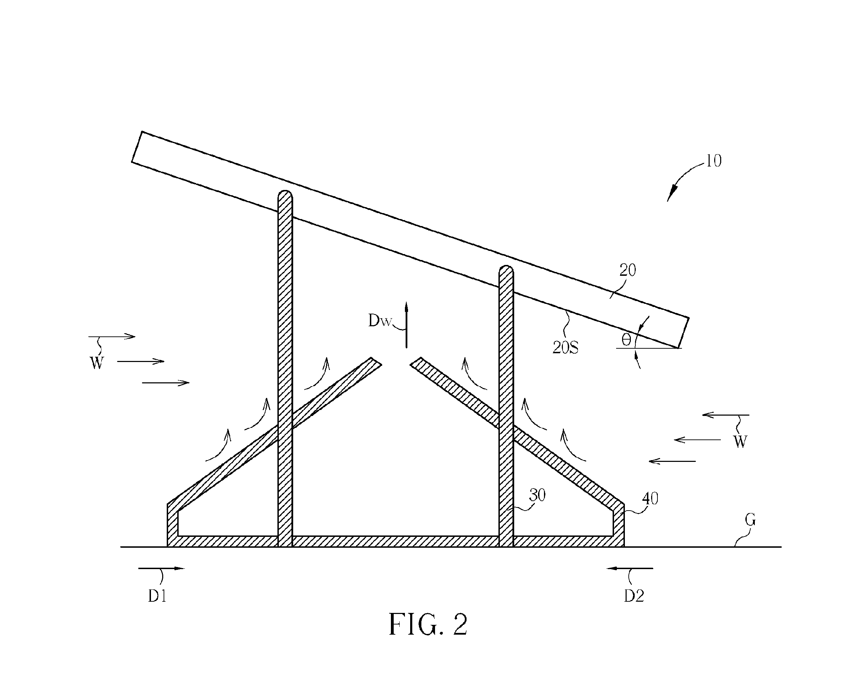

Please refer to FIG. 1 and FIG. 2. FIG. 1 and FIG. 2 are schematic diagrams illustrating a solar panel module according to a first preferred embodiment of the present invention, where FIG. 1 is a front view of the solar panel module, and FIG. 2 is a cross-sectional view of the solar panel module. As shown in FIG. 1 and FIG. 2, the solar panel module 10 of this embodiment includes a solar panel 20, a supporting stand 30 and a deflecting device 40. The solar panel 20 includes a plurality of solar cell units 20C. One end of the supporting stand 30 may be connected to the solar panel 20, while the other end of the solar supporting stand 30 may be disposed or fixed on the ground G or on the roof or wall of a building for supporting the solar panel 20 and making the solar panel 20 dispose at a tilt angle θ with respect to the horizontal plane. The deflecting device 40 is disposed underneath the solar panel 20 for deflecting wind W blowing from lateral directions toward a wind exiting direction Dw facing a bottom surface 20S of the solar panel 20 to dissipate heat from the solar panel 20.

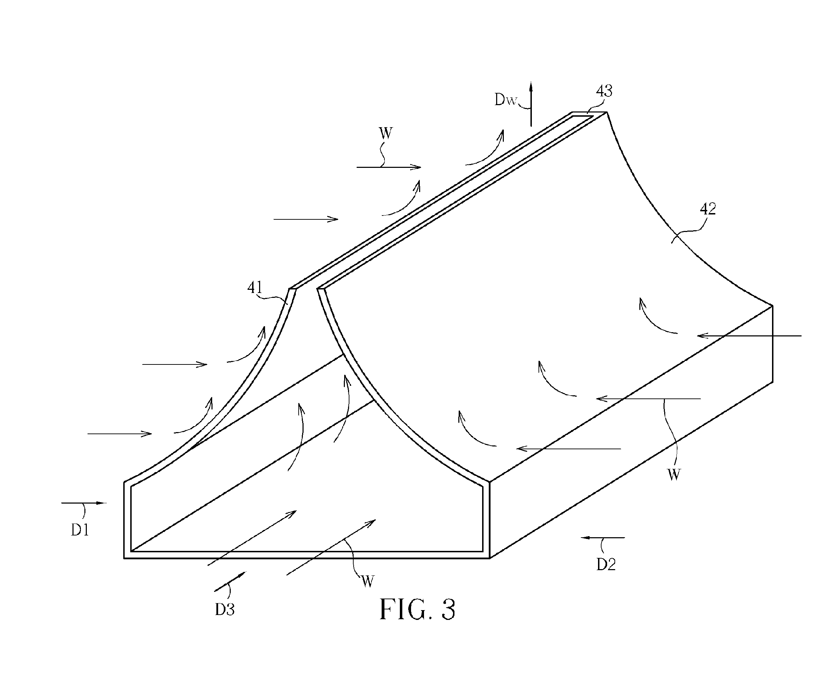

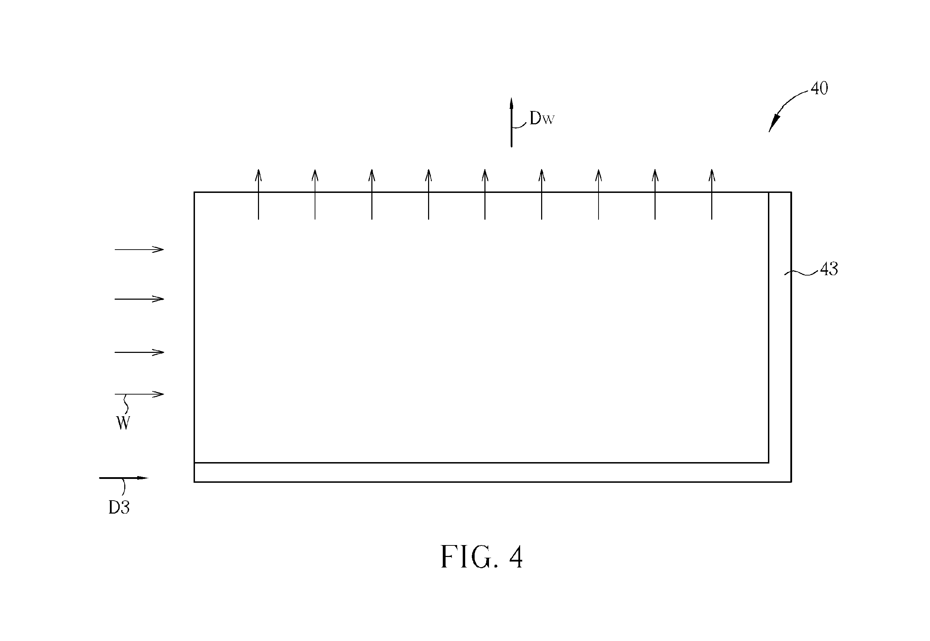

Please refer to FIG. 3 and FIG. 4, as well as FIG. 1 and FIG. 2. FIG. 3 and FIG. 4 are schematic diagrams illustrating a deflecting device of the solar panel module of FIG. 1 and FIG. 2 according to a first preferred configuration, where FIG. 3 is an oblique diagram of the deflecting device, and FIG. 4 is a cross-sectional view of the deflecting device. As shown in FIG. 3, the deflecting device 40 of the first configuration includes a first deflecting board 41 and a second deflecting board 42 disposed underneath the solar panel 20 and opposite to each other. The first deflecting board 41 and the second deflecting board 42 are used to deflect wind W blowing from a first lateral direction D1 toward the wind exiting direction Dw, and to deflect wind W blowing from a second lateral direction D2 opposite to the first lateral direction D1 toward the wind exiting direction Dw, respectively. At least one of the first deflecting board 41 and the second deflecting board 42 preferably has a curved surface (i.e. the first deflecting board 41 and/or the second deflecting board 42 has a curved surface) for deflecting wind W blowing from the first lateral direction D1 and the second lateral direction D2 toward the wind exiting direction Dw, and the radius of curvature of the curved surface may be modified based on the requirement of the deflecting effect. The first deflecting board 41 and/or the second deflecting board 42 are not limited to have a curved surface, and may have an inclined surface for instance. In addition, as shown in FIG. 3 and FIG. 4, the deflecting device 40 may further include a third deflecting board 42 disposed underneath the solar panel 20 and between the first deflecting board 41 and the second deflecting board 42. The third deflecting board 43 is used to deflect wind W blowing from a third lateral direction D3 perpendicular to the first lateral direction D1 toward the wind exiting direction Dw.

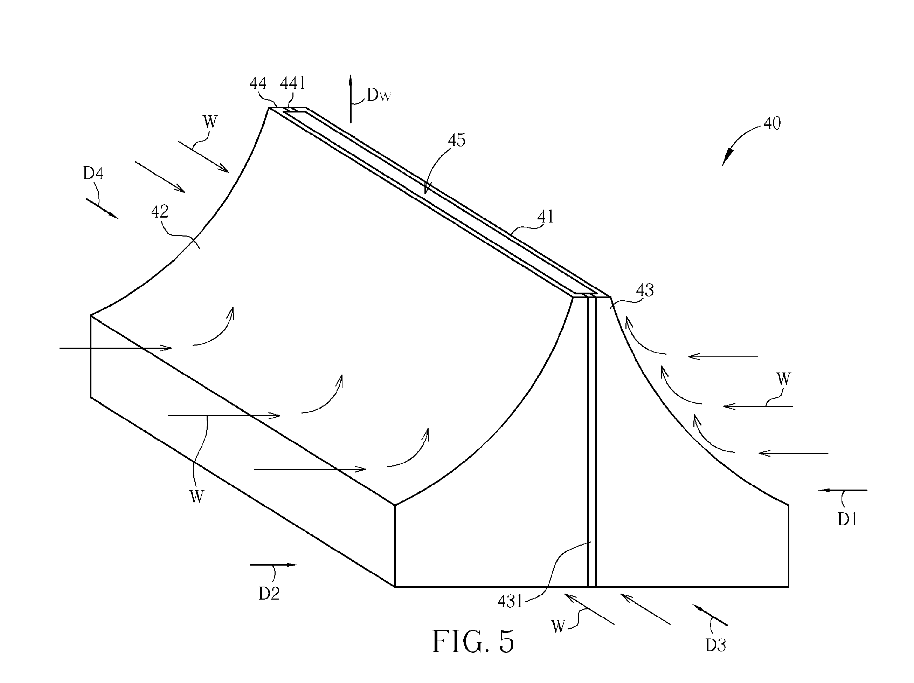

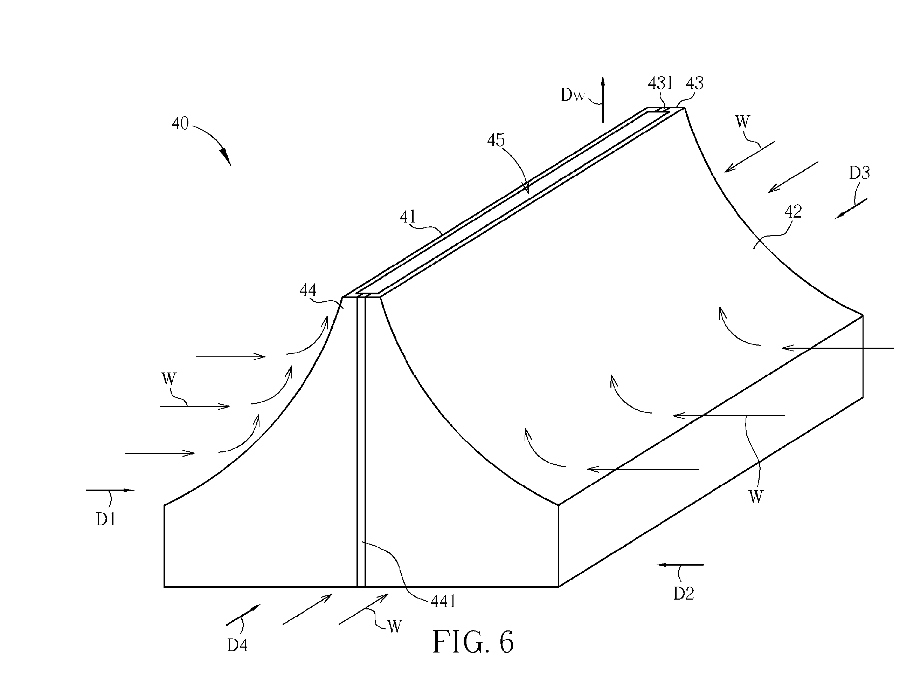

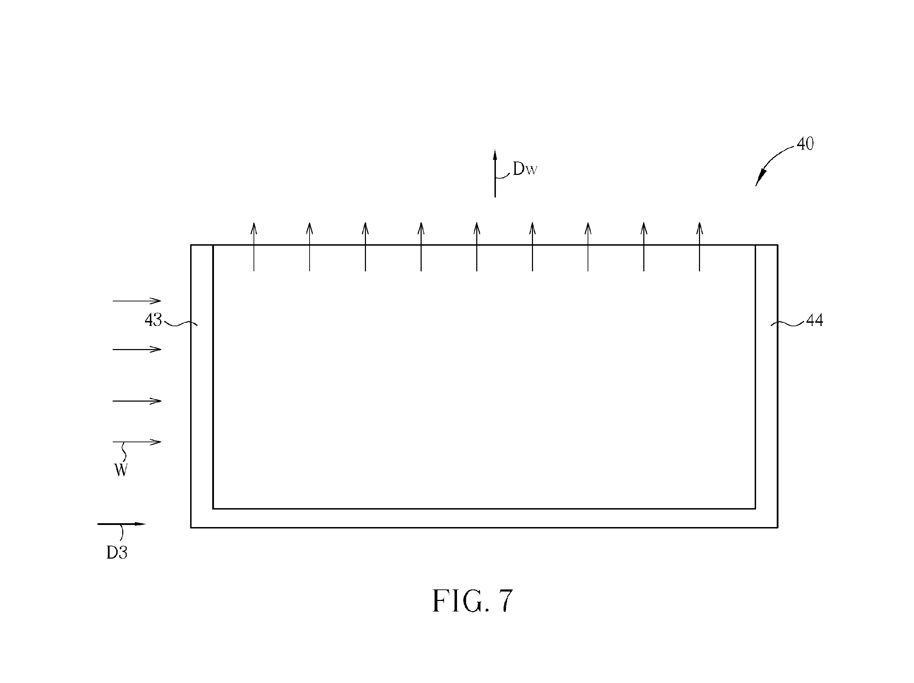

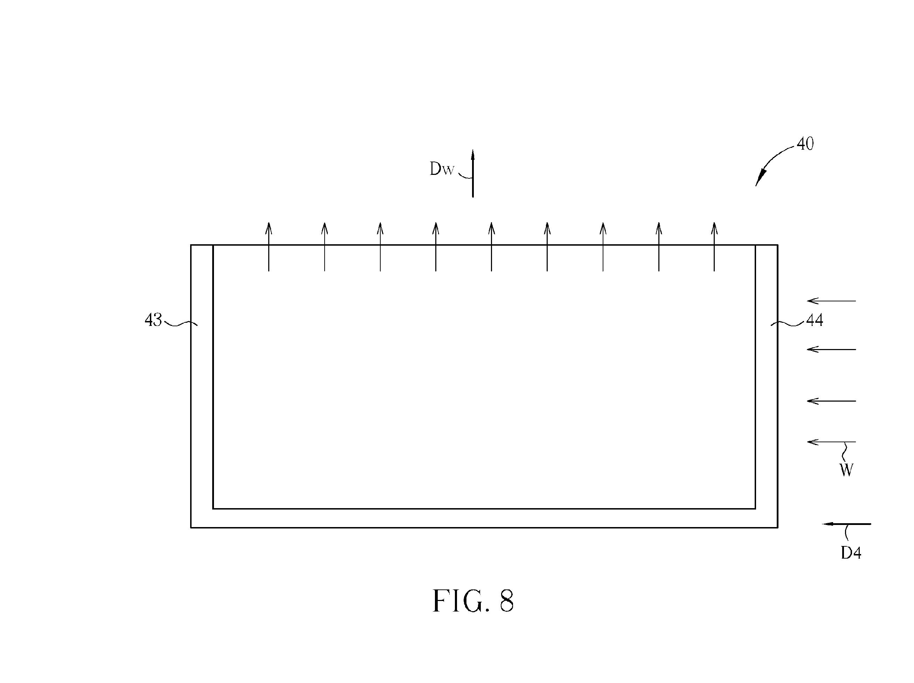

Please refer to FIGs. 5-8, as well as FIG. 1 and FIG. 2. FIGs. 5-8 are schematic diagrams illustrating a deflecting device of the solar panel module of FIG. 1 and FIG. 2 according to a second preferred configuration, where FIG. 5 and FIG. 6 are oblique views of the deflecting device, and FIG. 7 and FIG. 8 are cross-sectional views of the deflecting device. As shown in FIGs. 5-8, different from the first preferred configuration, in addition to the first deflecting board 41, the second deflecting board 42 and the third deflecting board 43, the deflecting device 40 of the second configuration further includes a fourth deflecting board 44. The third deflecting board 43 and the fourth deflecting board 44 are disposed opposite to each other, and between the first deflecting board 41 and the second deflecting board 42. The first deflecting board 41, the second deflecting board 42, the third deflecting board 43 and the fourth deflecting board 44 form a space and an opening 45 facing the bottom surface 20S (as shown in FIG. 1) of the solar panel 20. The third deflecting board 43 is used to deflect wind W blowing from a third lateral direction D3 perpendicular to the first lateral direction D1 toward the wind exiting direction Dw, and the fourth deflecting board 44 is used to deflect wind W blowing from a fourth lateral direction D4 opposite to the third lateral direction D3 toward the wind exiting direction Dw. In the second configuration, the deflecting device 40 may further include a first check valve 431 disposed on the third deflecting board 43, and a second check valve 441 disposed on the fourth deflecting board 44. As shown in FIG. 5 and FIG. 7, the first check valve 431 allows wind W blowing from the third lateral direction D3 entering the space, and wind W entering the space through the first check valve 431 is deflected by the fourth deflecting board 44, and goes through the opening 45 toward the wind exiting direction Dw to dissipate heat from the solar panel 20. As shown in FIG. 6 and FIG. 8, the second check valve 441 allows wind W blowing from the fourth lateral direction D4 entering the space, and wind W entering the space through the second check valve 441 is deflected by the third deflecting board 43, and goes through the opening 45 toward the wind exiting direction Dw to dissipate heat from the solar panel 20.

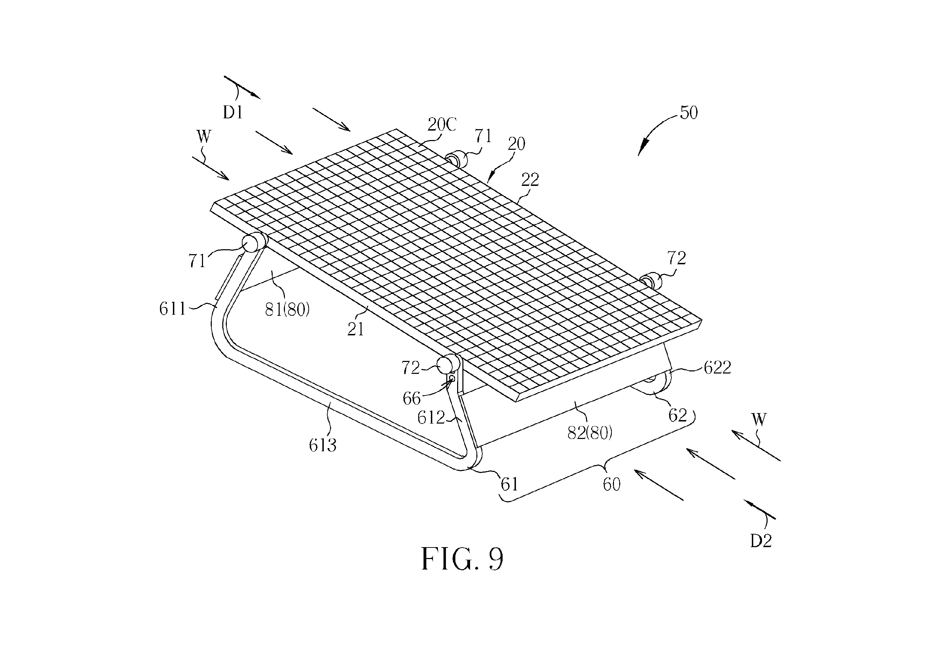

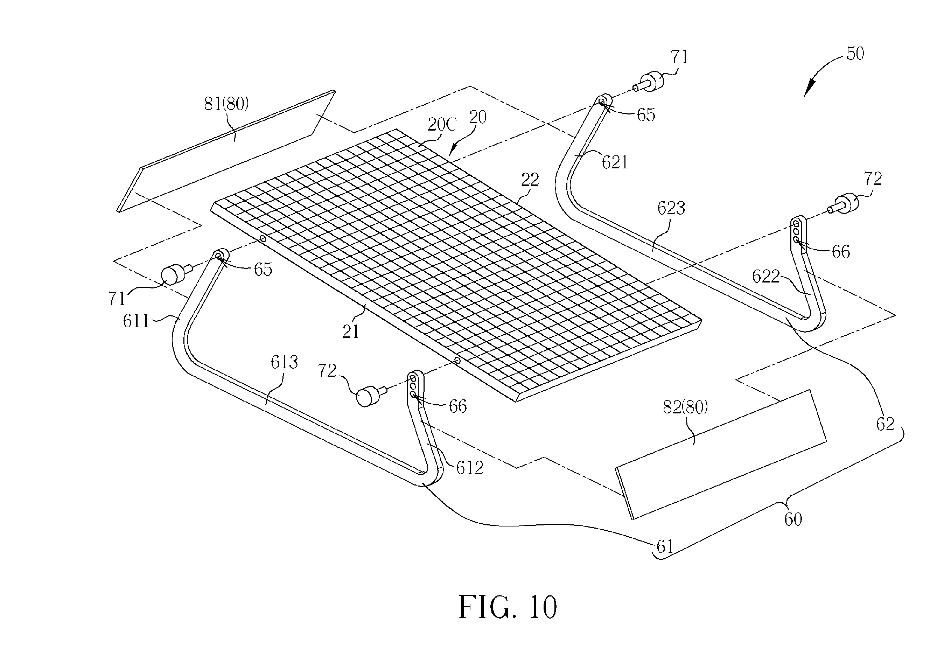

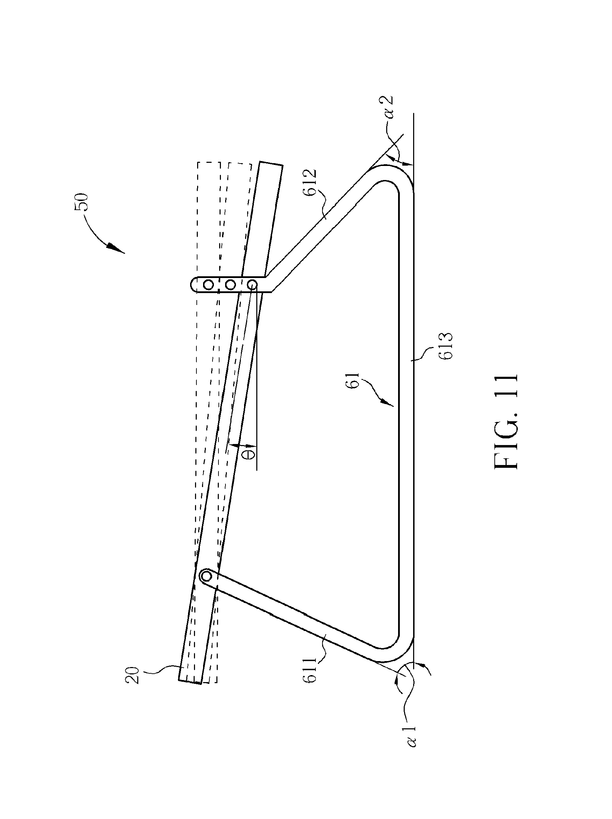

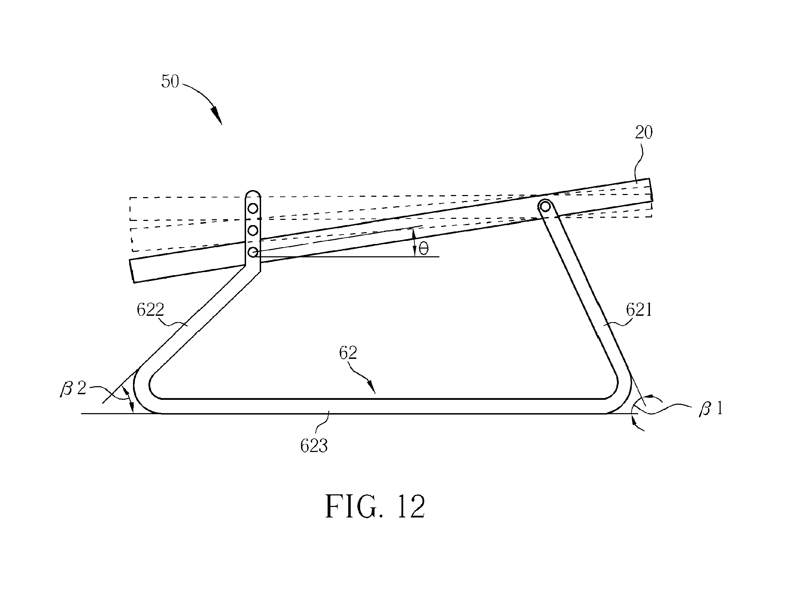

Please refer to FIGs. 9-12. FIGs. 9-12 are schematic diagrams illustrating a solar panel module according to a second preferred embodiment of the present invention, where FIG. 9 is an oblique view of the solar panel module, FIG. 10 is an exploded view of the solar panel module, FIG. 11 is a left side view of the solar panel module, and FIG. 12 is a right side view of the solar panel module. As shown in FIGs. 9-12, the solar panel module 50 of this embodiment includes a solar panel 20, a supporting stand 60 and a deflecting device 80. The solar panel 20 includes a plurality of solar cell units 20C, and the solar panel 20 has a first side 21 and a second side 22 disposed in parallel and opposite to each other. The supporting stand 60 includes a first frame 61 and a second frame 62. The first frame 61 includes a first part 611 connected to the first side 21 of the solar panel 20, and a second part 612 adjustably connected to the first side 21 of the solar panel 20 for adjusting the tilt angle θ of the solar panel 20. The second frame 62 includes a first part 621 connected to the second side 22 of the solar panel 20, and a second part 622 adjustably connected to the second side 22 of the solar panel 20 for adjusting the tilt angle θ of the solar panel 20. In this embodiment, the first frame 61 may further include a third part 613 connected to the first part 611 and the second part 612 to form a U-shaped (or U-shape like) structure. The first part 611 and the third part 613 of the first frame 61 have an acute included angle α1, and the second part 612 and the third part 613 of the first frame 61 have an acute included angle α2. The second frame 62 may further include a third part 623 connected to the first part 621 and the second part 622 to form a U-shaped (or U-shape like) structure, the first part 621 and the third part 623 of the second frame 62 have an acute included angle β1, and the second part 622 and the third part 623 of the second frame 62 have an acute included angle β2. In this embodiment, the first frame 61 is preferably a monolithically-formed frame, and the second frame 62 is preferably a monolithically-formed frame, but not limited thereto. For example, the first frame 61 may be formed by a plurality of pieces, and the second frame 62 may be formed by a plurality of pieces.

The solar panel module 50 may further include a plurality of first fastening devices 71 and a plurality of second fastening devices 72. The first fastening devices 71 and the second fastening devices 72 may be, for example, screws or rivets, but not limited thereto. In addition, the first part 611 of the first frame 61 and the first part 621 of the second frame 62 have at least one first hole 65, respectively, and the second part 612 of the first frame 61 and the second part 622 of the second frame 62 have a plurality of second holes 66, respectively. The first fastening devices 71 can be inserted into the first holes 65 for connecting the first part 611 of the first frame 61 with the first side 21 of the solar panel 20, and for connecting the first part 621 of the second frame 62 with the second side 22 of the solar panel 20. The second fastening devices 72 can be selectively inserted into a portion of the second holes 66 for adjustably connecting the second part 612 of the first frame 61 with the first side 21 of the solar panel 20, and for adjustably connecting the second part 622 of the second frame 62 with the second side 22 of the solar panel 20. Specifically, in this embodiment, the second fastening devices 72 can be inserted into proper second holes 66 to adjust the tilt angle θ of the solar panel 20 based on different incident angle of sunlight for improving power generating efficiency.

The deflecting device 80 is disposed underneath the solar panel 20, and the deflecting device 80 includes a first deflecting board 81 and a second deflecting board 82. The first deflecting 81 is fixed on the first part 611 of the first frame 61 and the first part 621 of the second frame 62 for deflecting wind W blowing from the first lateral direction D1 toward the wind exiting direction Dw. The second deflecting board 82 is fixed on the second part 612 of the first frame 61 and the second part 622 of the second frame 62 for deflecting wind W blowing from the second lateral direction D2 opposite to the first lateral direction D1 toward the wind exiting direction Dw. In this embodiment, the first deflecting board 81 and the second deflecting board 82 may be, for example, wind-shielding cloth or canvas, but not limited thereto. The material of the first deflecting board 81 and the second deflecting board 82 may also be other soft or hard wind-shielding materials. It is noted that the supporting stand of the second preferred embodiment may also be used to support the solar panel of the first preferred embodiment.

In summary, the deflecting device of the solar panel module of the present invention is able to deflect wind blowing from lateral directions toward the bottom surface of the solar panel, and thus the heat dissipating efficiency of the solar panel module is dramatically improved. Accordingly, power generating efficiency can be maintained after long-term operation because the solar panel can be kept at proper operating temperature. In addition, the supporting stand of the solar panel module has an adjustable tilt angle design, making it possible to adjust the tilt angle of the solar panel based on the incident angle of sunlight.

## Claims

1. A solar panel module (10, 50), **characterized by**:
a solar panel (20);
a supporting stand (30, 60), structurally connected to the solar panel (20), for
supporting the solar panel (20), wherein the solar panel (20) is disposed inclinedly, and the solar panel (20) has a tilt angle (8) with respect to a horizontal plane; and
a deflecting device (40, 80), disposed underneath the solar panel (20), for
deflecting wind (W) blowing from lateral directions toward a wind exiting direction (Dw), wherein the wind exiting direction (Dw) faces a bottom surface (20S) of the solar panel (20).

2. The solar panel module (10) of claim 1, **characterized in that** the deflecting device (40) comprises a first deflecting board (41) and a second deflecting board (42) disposed underneath the solar panel (20) and opposite to each other, for deflecting the wind (W) blowing from a first lateral direction (D1) toward the wind exiting direction (Dw) and deflecting the wind (W) blowing from a second lateral direction (D2), opposite to the first lateral direction (D1), toward the wind exiting direction (Dw), respectively.

3. The solar panel module (10) of claim 2, **characterized in that** the deflecting device (40) further comprises a third deflecting board (43), disposed underneath the solar panel (20) and between the first deflecting board (41) and the second deflecting board (42), for deflecting the wind (W) blowing from a third lateral direction (D3), substantially perpendicular to the first lateral direction (D1), toward the wind exiting direction (Dw).

4. The solar panel module (10) of claim 2, **characterized in that** the deflecting device (40) further comprises a third deflecting board (43) and a fourth deflecting board (44), disposed underneath the solar panel (20), opposite to each other and between the first deflecting board (41) and the second deflecting board (42), and the first deflecting board (41), the second deflecting board (42), the third deflecting board (43) and the fourth deflecting board (44) form a space, and an opening (45) facing the bottom surface (20S) of the solar panel (20).

5. The solar panel module (10) of claim 4, **characterized in that** the third deflecting board (43) is used to deflect the wind (W) blowing from a third lateral direction (D3), substantially perpendicular to the first lateral direction (D1), toward the wind exiting direction (Dw), and the fourth deflecting board (44) is used to deflect wind (W) blowing from a fourth lateral direction, opposite to the third lateral direction (D3), toward the wind exiting direction (Dw).

6. The solar panel module (10) of claim 4, **characterized in that** the deflecting device (40) comprises a first check valve (431) disposed on the third deflecting board (43), and a second check valve (432) disposed on the fourth deflecting board (44), wherein the first check valve (431) is used to allow the wind (W) blowing from the third lateral direction (D3) entering the space, and the wind (W) entering the space through the first check valve (431) is deflected by the fourth deflecting board (44), and goes through the opening (45) toward the wind exiting direction (Dw), the second check valve (432) is used to allow the wind (W) blowing from the fourth lateral direction entering the space, and the wind (W) entering the space through the second check valve (432) is deflected by the third deflecting board (43), and goes through the opening (45) toward the wind exiting direction (Dw).

7. The solar panel module (10) of claim 2, **characterized in that** the first deflecting board (41) and/or the second deflecting board (42) has a curved surface.

8. The solar panel module (50) of claim 1, **characterized in that** the solar panel (20) has a first side (21) and a second side (22) disposed in parallel and opposite to each other, the supporting stand (60) comprises a first frame (61) and a second frame (62), the first frame (61) comprises a first part (611) connected to the first side (21) of the solar panel (20), and a second part (612) adjustably connected to the first side (21) of the solar panel (20) for adjusting the tilt angle (θ) of the solar panel (20), the second frame (62) includes a first part (621) connected to the second side (22) of the solar panel (20), and a second part (622) adjustably connected to the second side (22) of the solar panel (20) for adjusting the tilt angle (θ) of the solar panel (20).

9. The solar panel module (50) of claim 8, **characterized in that** the first frame (61) further comprises a third part (613) connected to the first part (611) and the second part (612) to form a U-shaped structure, the first part (611) and the third part (613) of the first frame (61) have an acute included angle (α1), and the second part (612) and the third part (613) of the first frame (61) have an acute included angle (α2), and wherein the second frame (62) further comprises a third part (623) connected to the first part (621) and the second part (622) to form a U-shaped structure, the first part and the third part (623) of the second frame (62) have an acute included angle (β1), and the second part (622) and the third part (623) of the second frame (62) have an acute included angle (β2).

10. The solar panel module (50) of claim 9, **characterized in that** the first frame (61) is a monolithically-formed frame, and the second frame (62) is a monolithically-formed frame.

11. The solar panel module (50) of claim 8, **characterized by** a plurality of first fastening devices (71) and a plurality of second fastening devices (72), wherein the first part (611) of the first frame (61) and the first part (621) of the second frame (62) have at least one first hole (65), respectively, the second part (612) of the first frame (61) and the second part (622) of the second frame (62) have a plurality of second holes (66), respectively, wherein the first fastening devices (71) are inserted into the first hole (65)s for connecting the first part (611) of the first frame (61) with the first side (21) of the solar panel (20), and for connecting the first part (621) of the second frame (62) with the second side (22) of the solar panel (20), and the second fastening devices (72) are selectively inserted into a portion of the second holes (66) for adjustably connecting the second part (612) of the first frame (61) with the first side (21) of the solar panel (20), and for adjustably connecting the second part (622) of the second frame (62) with the second side (22) of the solar panel (20).

12. The solar panel module (50) of claim 8, **characterized in that** the deflecting device (80) comprises a first deflecting board (81) and a second deflecting board (82), the first deflecting board (81) is fixed on the first part (611) of the first frame (61) and the first part (621) of the second frame (62) for deflecting the wind (W) blowing from a first lateral direction (D1) toward the wind exiting direction (Dw), and the second deflecting board (82) is fixed on the second part (612) of the first frame (61) and the second part (622) of the second frame (62) for deflecting the wind (W) blowing from a second lateral direction (D2), opposite to the first lateral direction (D1), toward the wind exiting direction (Dw).

13. The solar panel module (10) of claim 8, **characterized in that** the deflecting device (40) comprises a first deflecting board (41) and a second deflecting board (42), the first deflecting board (41) is fixed on the first part (611) of the first frame (61) and the second part (612) of the first frame (61) for deflecting the wind (W) blowing from a first lateral direction (D1) toward the wind exiting direction (Dw), and the second deflecting board (42) is fixed on the first part (621) of the second frame (62) and the second part (622) of the second frame (62) for deflecting the wind (W) blowing from a second lateral direction (D2), opposite to the first lateral direction (D1), toward the wind exiting direction (Dw).
